# EUROPEAN PATENT APPLICATION

(11) **EP 3 010 218 A1**
(43) Date of publication of application: **20.04.2016**
(21) Application number: 15181058.7
(22) Date of filing: 14.08.2015
(51) Int. Cl.: H04N 1/00

(54) **IMAGE SCANNING APPARATUS AND IMAGE SCANNING METHOD**

(30) Priority: 18.08.2014 KR 20140106798
(71) Applicant: Samsung Electronics Co., Ltd., Suwon-si, Gyeonggi-do (KR)
(72) Inventor: BIN, Sung-uk, Gyeonggi-do (KR); LEE, Sang-hyong, Seoul (KR)
(74) Representative: Walaski, Jan Filip

(57) **Abstract**

An image scanning apparatus and method are provided. The image scanning apparatus includes a scanner configured to scan a document to generate a scan image, a driver configured to move the document or the scanner, a position sensor configured to, in response to the scanner or the document passing a preset position, generate a position interruption, and a controller configured to control the driver to move the scanner or the document according to a scan command. The scanner scans the document without control of the controller after the position interruption is generated and then a preset time elapses.

## Description

The present invention relates to an image scanning apparatus and image scanning method, and more particularly, to providing an image scanning apparatus and an image scanning method that may start a scanning operation in an accurate position even if several interruptions occur simultaneously.

An image scanning apparatus is an apparatus that scans an original image such as a document, a picture, a film, or the like to convert the original image into digital data. The digital data may be displayed on a monitor of a computer or may be printed by a printer to be generated as an output image. Examples of the image scanning apparatus may include a scanner, a copier, a fax machine, a multifunction peripheral (MFP) having multiple functions in one device, etc.

The image scanning apparatus may have a constant mechanical distance (hereinafter referred to as a front end distance) from a position sensor for sensing a scan document to a position for scanning a real document. Therefore, if the position sensor generates an interruption for notifying that the document is sensed, the image scanning apparatus may transmit a scan command to a scan unit to start a scan after a time corresponding to the front end distance.

However, in the image scanning apparatus, an interruption having a higher priority than the interruption for notifying that the document is sensed may be generated between a generation time of the for notifying that the document is sensed and a transmission time of the scan command, and thus the scan command may not be transmitted at an accurate time. Therefore, since the scan command may not be transmitted at the accurate time, a front end deviation may exist in a scan image generated by the image scanning apparatus.

An image scanning apparatus recognizes a sensing signal from the position sensor and then transmits the scan command to the scan unit after a time preset. Therefore, if the position sensor generates another interruption at a reception time of the sensing signal, the recognition of the sensing signal may be delayed, and the transmission of the scan command may be delayed.

Additional aspects and/or advantages will be set forth in part in the description which follows and, in part, will be apparent from the description, or may be learned by practice of the invention.

Exemplary embodiments address the above problems and/or disadvantages and other disadvantages not described above

The exemplary embodiments provide an image scanning apparatus and an image scanning method that may start a scan operation in an accurate position even if several interruptions occur simultaneously.

According to an aspect of an exemplary embodiment, an image scanning apparatus is provided including a scanner configured to scan a document to generate a scan image, a driver configured to move the document or the scanner, a position sensor configured to, in response to the scanner or the document passing a preset position, generate a position interruption, and a controller configured to control the driver to move the scanner or the document according to a scan command. After the position interruption is generated and then a preset time elapses, the scanner may scan the document without control of the controller.

The scanner directly may receive the position interruption from the position sensor and automatically scan the document without a control command of the controller after the position interruption is received and then a preset interruption time elapses.

The preset time may be a time value corresponding to a front end distance.

The preset time may be determined in a scan counter unit.

The scan counter unit may be a motor interval of a motor included in the driver.

The scanner may be a flatbed type. The driver may include a scan driver configured to move the scanner on a scan path. The position sensor may be positioned to keep a distance from a document front end area on the scan path of the scanner and, in response to the scanner passing a preset position on the scan path, generate the position interruption.

The scanner may be an automatic document feeder (ADF) type. The driver may include a document driver configured to move the document on a document transfer path. The position sensor may be positioned to keep a distance from the scanner on the document transfer path and, in response to the document passing a preset position on the document transfer path, generate the position interruption.

According to an aspect of an exemplary embodiment, an image scanning apparatus is provided including a scanner configured to scan a document to generate a scan image, a driver configured to move the document or the scanner; a position sensor configured to, in response to the scanner or the document passing a preset position, generate a position interruption, and a controller configured to control the driver to move the document along a scan path according to a scan command. In response to the position interruption being recognized, the controller may check a difference between a generation time of the position interruption and a recognition time of the position interruption to correct a scan counter value corresponding to a front end distance and control the scanner to start scanning the document based on the corrected scan counter value.

The image scanning apparatus may include a counter configured to, in response to the position interruption being generated, perform position counting in a preset time unit. In response to the position interruption being recognized, the controller may correct the scan counter value based on the position counting of the counter.

The preset time unit may be a motor interval of a motor comprised in the driver.

The controller may control the scanner to scan the document after a time corresponding to the corrected scan counter value.

The scanner may automatically scan the document without receiving a scan start command from the controller.

The scanner may be a flatbed type. The driver may include a scan driver configured to move the scanner on a scan path. The position sensor may be positioned to keep a distance from a document front end area on the scan path of the scanner and, in response to the scanner passing a preset position on the scan path, generate the position interruption.

The scanner may be an ADF type. The driver may include a document driver configured to move the document on a document transfer path. The position sensor may be positioned to keep a distance from the scanner on the document transfer path and, in response to the document passing a preset position on the document transfer path, generate the position interruption.

According to an aspect of an exemplary embodiment, an image scanning method of an image scanning apparatus is provided including generating a driving signal for moving a document or a scanner, moving the document or the scanner according to the generated driving signal, in response to the document or the scanner passing a preset position, generating a position interruption, recognizing the position interruption and checking a difference between a generation time of the position interruption and a recognition time of the position interruption to correct a scan counter value corresponding to a front end distance; and starting scanning the document at a time corresponding to the corrected scan counter value to scan the document.

The above and/or other aspects will be more apparent by describing certain exemplary embodiments with reference to the accompanying drawings, in which:
FIG. 1 is a block diagram illustrating an image scanning apparatus according to an exemplary embodiment of the present general inventive concept;
FIG. 2 is a view illustrating an exemplary scanner;
FIG. 3 is a view illustrating an exemplary flatbed scanner;
FIG. 4 is a view illustrating exemplary operations of a scanner and a position sensor in a flatbed type;
FIG. 5 is a view illustrating an exemplary automatic document feeder (ADF) type scanner;
FIG. 6 is a view illustrating exemplary operations of a scanner and a position sensor in an ADF type;
FIG. 7 is a timing diagram illustrating an exemplary operation of a scanner, according to an exemplary embodiment of the present general inventive concept;
FIG. 8 is a timing diagram illustrating exemplary operations of a scanner and a controller according to an exemplary embodiment of the present general inventive concept;
FIG. 9 is a timing diagram illustrating an exemplary operation of a counter;
FIG. 10 is a timing diagram illustrating an exemplary motor interval;
FIG. 11 is a timing diagram illustrating an exemplary relation between a motor interval and a scan operation;
FIG. 12 is a flowchart illustrating an image scanning method according to an exemplary embodiment of the present general inventive concept;
FIG. 13 is a flowchart illustrating an image scanning method according to an exemplary embodiment of the present general inventive concept; and
FIG. 14 is a flowchart illustrating an exemplary image scanning method.

Exemplary embodiments are described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail.

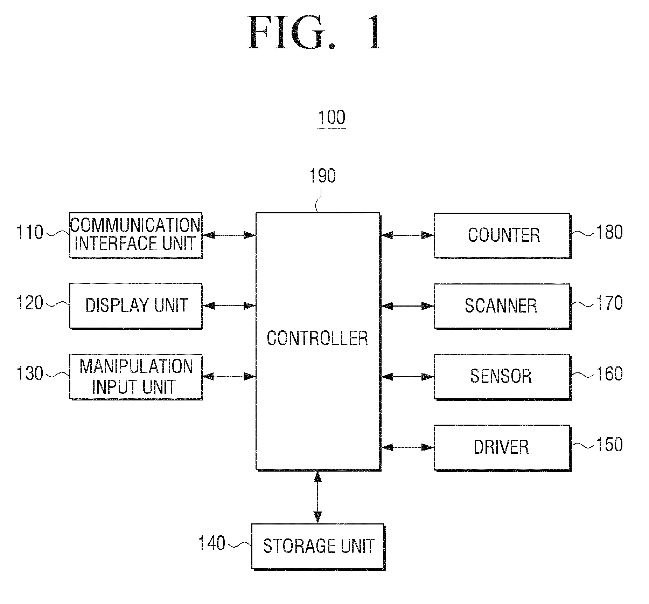

FIG. 1 is a block diagram illustrating an image scanning apparatus 100 according to an exemplary embodiment of the present general inventive concept.

Referring to FIG. 1, the image scanning apparatus 100 includes a communication interface unit 110, a display unit 120, a manipulation input unit 130, a storage unit 140, a driver 150, a sensor 160, a scanner 170, a counter 180, and a controller 190. The image scanning apparatus 100 may be a scanner that may perform only a scan, a fax machine or a multifunction peripheral (MFP) that may perform printing, copying, faxing, etc., or the like.

The communication interface unit 110 may be connected to a host apparatus (not shown) such as a PC, a notebook PC, a personal digital assistant (PDA), a digital camera, or the like and transmit scan data scanned by the image scanning apparatus 100 to the host apparatus.

The communication interface unit 110 may be formed to connect the image scanning apparatus 100 to an external apparatus and may be connected to a terminal device through a local area network (LAN) and the Internet or through a universal serial bus (USB) port. The communication interface unit 110 may receive a scan command from the host apparatus.

The display unit 120 may display various types of information provided in the image scanning apparatus 100. The display unit 120 may display a user interface window for selecting various functions provided by the image scanning apparatus 100. The display unit 120 may be a monitor such as a liquid crystal display (LCD), a cathode-ray tube (CRT), or the like or may be realized as a touch screen that may simultaneously perform a function of the manipulation input unit 130.

The manipulation input unit 130 receives the scan command from a user. The manipulation input unit 130 includes a plurality of function keys through which the user may set or select various functions supported in the image scanning apparatus 100. The manipulation input unit 130 may be realized as a plurality of buttons, a keyboard, a mouse, or the like or may be realized as a touch screen that may simultaneously perform a function of the display unit 120.

The scan command may be a command for performing only a scan job, a scan-to-server command, a scan-to-digital living network alliance (DLNA) command, or a scan-to-cloud command for transmitting a scanned document to a particular server, or the like.

If the image scanning apparatus 100 is an MFP that may also perform printing and copying jobs, the scan command may be a copy command that uses a scan function. The scan command may be received through the manipulation input unit 130. According to an exemplary embodiment, the scan command may be received from the host apparatus through the communication interface unit 110.

The storage unit 140 may store scan data that is generated by the scanner 170. The storage unit 140 may store a preset scan counter value (i.e., time information corresponding to a front end distance).

The storage unit 140 may be realized as an internal storage medium of the image scanning apparatus 100 or an external storage medium, for example, may be realized as a removable disk including a USB memory, a storage medium connected to a host, a web server through a network, or the like.

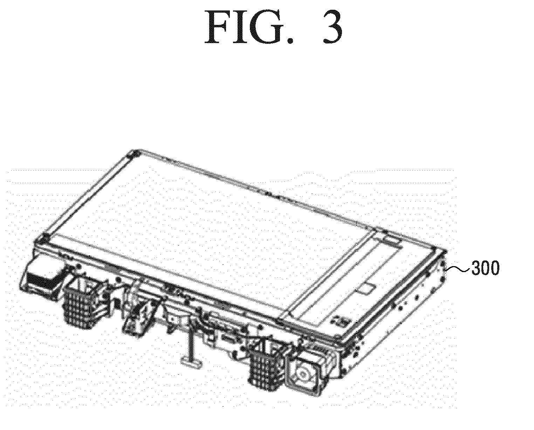

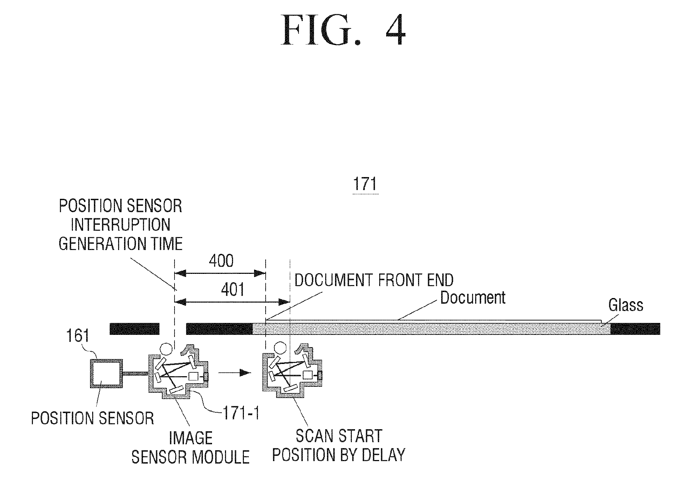

The driver 150 moves a document or the scanner 170. The scanner 170 may be a flatbed type or an automatic document feeder (ADF) type. If the scanner 170 is the flatbed type, the driver 150 includes a mechanical structure and a motor that may move the scanner 170 onto a scan path. The scanner 170 may be mounted on a side of the mechanical structure, and a light source module for scanning the document may be mounted on the mechanical structure. An exemplary shape and an operation of the driver 150 in such a flatbed type is described with reference to FIGS. 3 and 4.

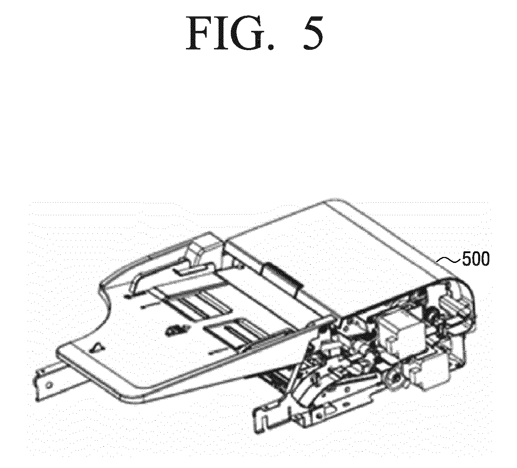

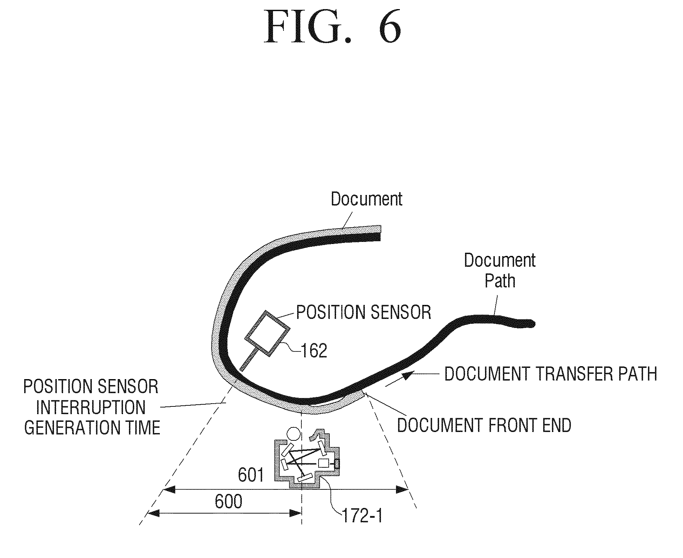

If the scanner 170 is the ADF type, the driver 150 may include a mechanical structure and a motor that may move the document onto a document transfer path. An exemplary shape and an operation of the driver 150 in such an ADF type is described with reference to FIGS. 5 and 6.

The driver 150 may drive only one of a document and a scanner. If the image scanning apparatus 100 is an apparatus including both of a flatbed type and an ADF type, the driver 150 may include a first driver for driving the scanner and a second driver for driving the document.

The sensor 160 includes a position sensor that generates a position interruption (or a position sensor interruption). The position sensor may be disposed on a scan path of the scanner 170 or a document transfer path of the document to generate the position interruption if the scanner or the document passes a preset position. The position sensor that is disposed on the scan path of the scanner 170 may be referred to as a first position sensor 161, and the position sensor that is disposed on the document transfer path of the document may be referred to as a second position sensor 162.

If the scanner 170 is the flatbed type, the first position sensor 161 may be positioned to keep a distance from a front end area of the document on the scan path of the scanner 171. If the scanner 171 passes the preset position of the scan path, the first position sensor 161 may generate the position interruption. The front end area of the document may be a scan start point of the document. For example, the front end area may be a boundary of the document or a boundary having a preset margin from the boundary of the document.

If the scanner 170 is the self-feeder type, the second position sensor 162 may be positioned to keep a distance from the front end of the document on the document transfer path of the document. If the document passes a preset position of the document transfer path, the second position sensor 162 may generate a position interruption.

The scanner 170 scans the document to generate a scan image. The scanner 170 may be realized as a scanning device that scans the document and a controller that controls an operation of the scanning device. The controller may control the scanning device to perform a scan after a preset time elapses from a generation time of the position interruption. The scanner 170 may operate as both types of scanners so as not to delay a scan start due to another interruption.

According to an exemplary embodiment, the scanner 170 (e.g., a controller that directly controls an operation of a scanning device) may directly determine a start time of a scan job to perform the scan job without control of the controller 190 (e.g., without control of a central processing unit (CPU)). According to an embodiment, scanner 170 does not receive a scan start command of the controller 190 but directly receives position interruptions from the first and second position sensors 161 and 162 and starts a scan operation after a time corresponding to a front end distance. According to an exemplary embodiment, the scanner 170 directly receives the position interruptions. However, another hardware structure than the scanner 170 and the controller 190 may receive the position interruptions and transmit the scan start command after the time corresponding to the front end distance.

According to an exemplary embodiment, the controller 190 may check a delay caused by another interruption, compensate the delay, and inform the scanner 170 of a start time of a scan job or may inform the scanner 170 of a start time of the scan job compensated due to the delay to start a scan. According to an embodiment, the delay caused by another interruption may be compensated to start the scan job, and thus the scanner 170 may start the scan at an accurate time.

The scanner 170 may be realized as a flatbed type or an ADF type.

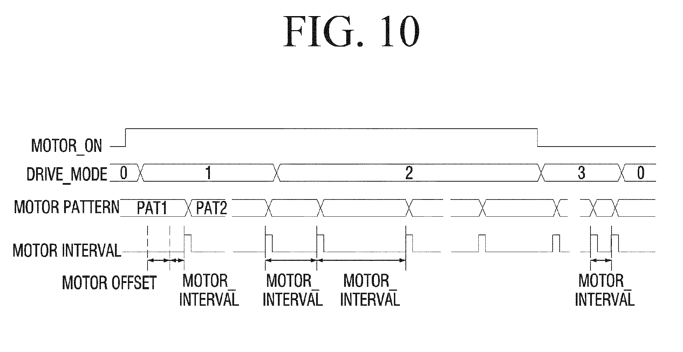

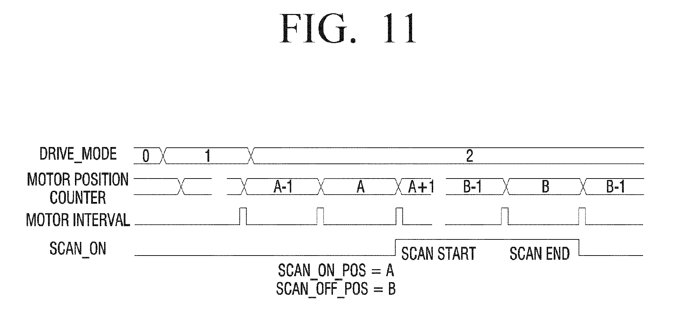

If a position interruption is generated, the counter 180 performs position counting in preset time units. The preset time units may be motor intervals of a motor included in a driver. The motor intervals are described in detail with reference to FIGS. 10 and 11.

The controller 190 controls elements of the image scanning apparatus 100. If a scan command is received from the manipulation input unit 130 or the communication interface unit 110, the controller 190 may control the driver 150 to move the scanner 170 or a document. The controller 190 may be realized as a CPU and S/W control code.

According to an exemplary embodiment, if a delay of a scan start is prevented, and a position interruption is recognized, the controller 190 may check a difference between a generation time of the position interruption and a recognition time of the position interruption to correct a scan counter value corresponding to a front end distance. If the position interruption is recognized, the controller 190 may receive a counter value from a counter that performs position counting in preset time units after the position interruption is generated, to correct a preset scan counter value. For example, at a time when the position interruption is recognized, the controller 190 may read a counter value of the counter 180 and subtract the read counter value from a preset scan counter value to correct a scan counter value.

The controller 190 may control the scanner 170 to start a scan job according to the corrected scan counter value. The controller 190 may transmit a scan start command to the scanner 170 at a preset time corresponding to the corrected scan counter value.

The image scanning apparatus 100 according to an exemplary embodiment may start a scan at an accurate time and thus prevent a front end deviation from irregularly changing in a scan image generated by the scanner 170.

As described with reference to FIG. 1, the driver 150, the sensor 160, the scanner 170, and the counter 180 may be separate elements or may be combined into three or less elements. For example, the driver 150, the sensor 160, the scanner 170, and the counter 180 may be realized as a scan module that performs functions of the driver 150, the sensor 160, the scanner 170, and the counter 180.

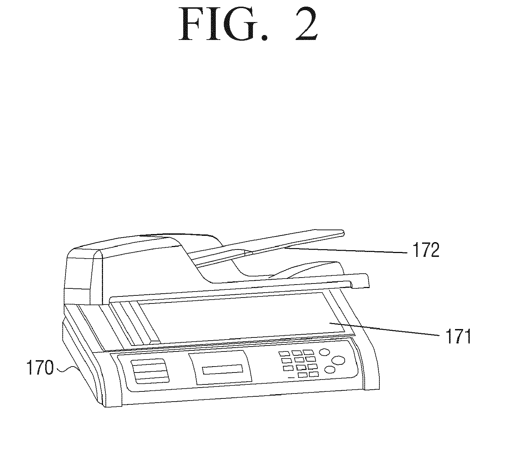

FIG. 2 is a view illustrating an exemplary type of the scanner 170 of FIG. 1.

Referring to FIG. 2, the scanner 170 includes a first scanner 171, e.g., platen of flatbed type that scans a document placed on a flat panel and a second scanner 172 e.g., ADH (ADF/DSDF) of ADF type that continuously scans a document placed on an automatic paper feeder tray. The scanner 170 includes two scanners according to an exemplary embodiment but may include only one scanner or three scanners.

The first scanner 171 is a flatbed scanning apparatus where a document may be placed on a flat panel, and a scan module moves under the flat panel, on which the document is placed, to scan the document. An exemplary structure and operation of the first scanner 171 is described with reference to FIGS. 3 and 4.

The second scanner 172 may be an ADF type scanning apparatus where paper sheets may be placed in a paper feeder tray and sequentially transferred to a paper transfer path, and a scan module positioned on the paper transfer path scans a document. An exemplary structure and operation of the second scanner 172 will be described later with reference to FIGS. 5 and 6. The second scanner 172 may be a one-side scanning apparatus that may scan only one side of a document or a double-side scanning apparatus that may scan both sides of the document.

The first and second scanners 171 and 172 respectively include scan modules, but one scan module may be commonly used in the first and second scanners 171 and 172.

FIG. 3 is a view illustrating an exemplary shape of a flatbed scanner 300. FIG. 4 is a view illustrating exemplary operations of a scanner and a position sensor in a flatbed type.

Referring to FIGS. 3 and 4, a scan module 171-1 of the first scanner 171 may be disposed under a flat bed and transfers data from a home area to a document area according to a scan command.

The first position sensor 161 may be disposed in the home area that keeps a distance from the document area to generate a position interruption if the scan module 171-1 transfers from the home area to the document area. If the position interruption is generated, the scan module 171-1 may perform scanning at a time corresponding to a distance from the home area to the document area, i.e., a front end distance. FIG. 4 illustrates an exemplary front end distance 400 and an exemplary front end distance lengthened by delay 401. According to an exemplary embodiment, the home area is an area in which the scan module 171-1 may be positioned if a scan job is not performed, and the document area is an area in which a document is placed on the flat bed.

As a time corresponding to a front end distance may be fixed, another interruption having a higher priority than a position sensor interruption may be generated at a generation time of the position sensor interruption. Therefore, if an interruption for notifying a scan start is delayed, the scan start may be delayed. However, according to an exemplary embodiment, the scan module 171-1 may automatically perform a scan start after a fixed time without an intervention of S/W at a position sensor interruption time. Alternatively, the controller 190 checks whether a position sensor interruption is delayed when the position sensor interruption is generated and compensates for a delay time to transmit a scan start command. Therefore, a scan job starts in an accurate document area.

FIG. 5 is a view illustrating an exemplary of an ADF type scanner 500. FIG. 6 is a view illustrating exemplary operations of a scanner and a position sensor in an ADF type. [0064] Referring to FIGS. 5 and 6, a scan module 172-1 of the second scanner 172 may be positioned in a preset area on a document transfer path, and a position sensor may be disposed in a position keeping position a distance from the scan module 172-1 on the document transfer path. FIG. 6 illustrates front end distance 600 and a front end distance lengthened by delay 601.

The second driver moves a document, which is placed on a loading part, through the document transfer path according to a scan command of a user. The second position sensor 162 senses the document to generate a position interruption according to the movement of the document.

The scan module 172-1 that senses the generation of the position interruption may perform scanning after a time corresponding to a front end distance corresponding to a distance between the second position sensor 162 and the scan module 172-1.

As the time corresponding to the front end distance is fixed, the another interruption having the higher priority than the position sensor interruption is generated at the generation time of the position sensor interruption. Therefore, if the interruption for notifying the scan start is delayed, the scan start may be delayed. However, according to an exemplary embodiment, the scan module 172-1 automatically performs a scan start after a fixed time without an intervention of S/W at a position sensor interruption time. Alternatively, the controller 190 checks whether an interruption is delayed when the position sensor interruption is generated and compensates for a delay time to transmit a scan start command. Therefore, a scan job starts in an accurate document area.

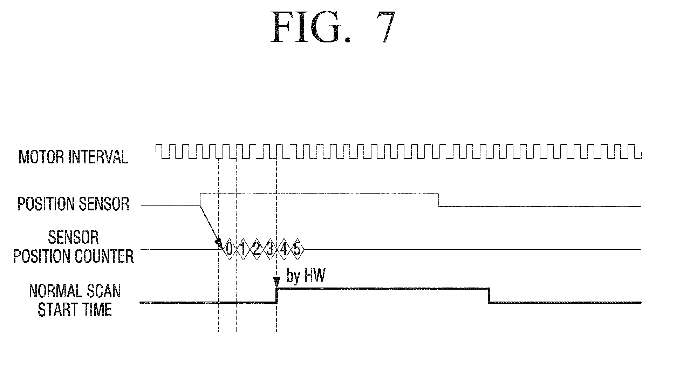

FIG. 7 is a timing diagram illustrating an operation of a scanner according to an exemplary embodiment of the present general inventive concept.

Referring to FIG. 7, the second position sensor 162 may sense a document according to a movement of the document, and the first position sensor 161 may sense a scanner according to a moving of the scanner. The first and second position sensors 161 and 162 may perform chattering on a sensing signal and generate position interruptions.

If the position interruption is generated, a scan module performs a scan job after a preset time unit (for example, after "5" in FIG. 7).

If the scan job is performed under control of a controller, and another interruption having a higher priority than a corresponding interruption is generated at a notification time of the interruption for notifying a start of the scan job, the controller first processes the another interruption and delays the notification of the interruption for notifying the start of the scan job.

According to an exemplary embodiment, without passing through the controller 190 (i.e., without an intervention of a CPU), the scanner 170 may directly receive a position interruption (i.e., a controller that controls a scanning sensor of the scanner 170 may directly receive the position interruption) and start a scan job at a time corresponding to a front end distance. Therefore, even if another interruption having a high priority is input into the controller 190, the scanner 170 may start the scan job at an accurate time.

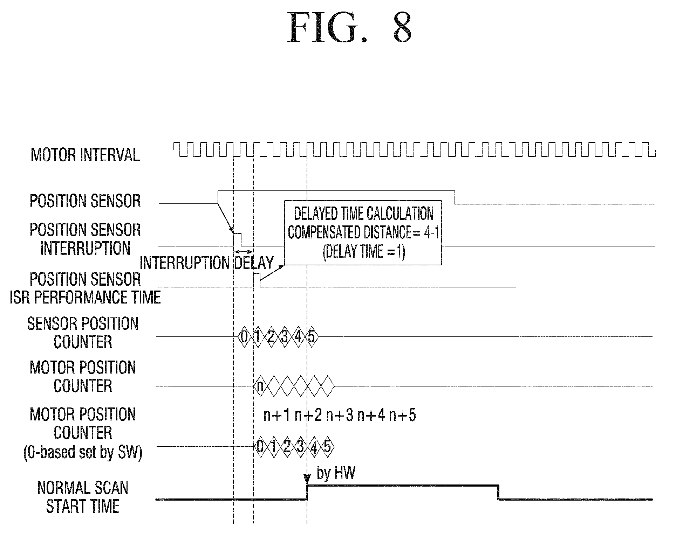

FIG. 8 is a timing diagram illustrating operations of a scanner and a controller according to an exemplary embodiment of the present general inventive concept.

Referring to FIG. 8, the first and second position sensors 161 and 162 sense paper sheets according to a movement of a document. The first and second position sensors 161 and 612 may perform chattering on a sensing signal and generate position interruptions.

If a position interruption is generated, a scan module performs a scan job after a preset interruption unit (for example, after "5" in FIG. 8).

If an urgent interruption is generated by another element at a generation time of the position interruption, the position interruption may not be immediately recognized by the controller 190, but may be delayed and then recognized. Therefore, t, as illustrated in FIG. 8, motor position counting may be delayed by one motor interval unit and then performed. A scanning start command may be delayed by one motor interval unit.

According to an exemplary embodiment, a sensor position counter value may be read at a recognition time of a position interruption, and a preset scan counter value may be corrected to perform counting. Therefore, even if the position interruption is delayed by another interruption and then recognized, the controller 190 may transmit scan start command to the scanner 170 at an accurate time.

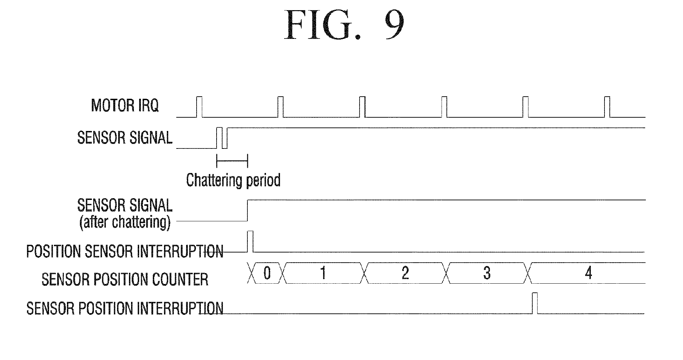

FIG. 9 is a timing diagram illustrating an exemplary operation of a counter.

Referring to FIG. 9, a motor interval MOTOR IRQ operates later since a motor is driven followed by a designated time, and outputs a periodic signal.

If a document or a scanner moves according to a driving of the motor, an internal sensor element of a position sensor generates a sensor signal corresponding to sensing of the document or a scan. The position sensor may perform chattering on the generated sensor signal to generate a position interruption.

If a position interruption is generated, the counter 180 performs counting from a generation time of the position interruption.

FIG. 10 is a timing diagram illustrating an exemplary motor interval.

Referring to FIG. 10, if a drive command and a drive mode are received under control of the controller 190, the driver 150 drives an internal motor. The driver 150 drives the motor in response to the transmitted drive mode. According to an exemplary embodiment, drive mode "0" refers to a stop of the motor, drive mode "1" refers to an acceleration of the motor, drive mode "2" refers to a fixed speed of the motor, and drive mode "3" refers to a speed reduction (a break) of the motor.

If the motor is driven, motor patterns may be formed after a preset time, and a motor interval occurs at an intersection time of the motor patterns.

FIG. 11 is a timing diagram illustrating an exemplary relation between a motor interval and a scan operation.

Referring to FIG. 11, a scan start and a scan end synchronize with each other at a generation time of a motor interruption corresponding to a motor interval.

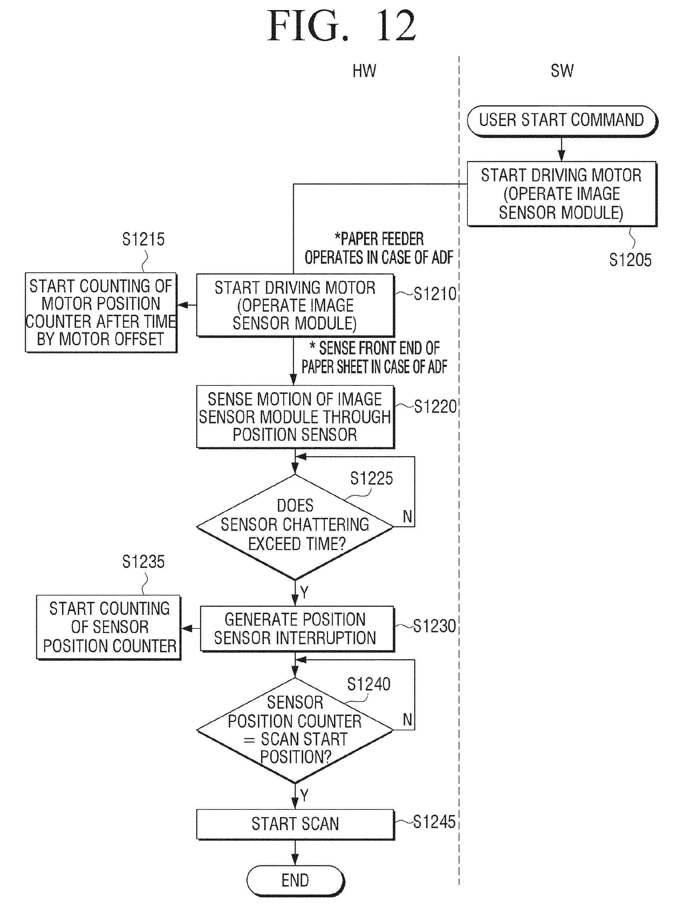

FIG. 12 is a flowchart illustrating an image scanning method according to an exemplary embodiment of the present general inventive concept. To facilitate a description of an exemplary image scanning method, the scanner 170 may be assumed as a flatbed type.

Referring to FIG. 12, if a user start command is input, information about a scan start command and a scan start position may be provided from the controller 190 to the scanner 170 in operation S1205.

The scanner 170 that receives a scan start command controls the driver 150 to move along a scan transfer path in operation S1210. In operation S1215, a motor position counter, which is for checking a motor position as a motor is driven, starts counting.

If the scanner 170 passes a preset area on a scan transfer path according to a movement of the scanner 170, the first position sensor 161 senses a motion of the scanner 170 in operation S1220. In operation S1225, the first position sensor 161 performs sensor chattering on the sensed motion for a preset time. If a preset time elapses according to the sensor chattering, the first position sensor 161 generates a position interruption in operation S1230.

The generated position interruption may be transmitted to the scanner 170. In operation S1235, the generated position interruption may be transmitted to the counter 180 to start counting a sensor position.

In operation S1240, the scanner 170 that receives the position interruption counts whether the position interruption passes a sensor counter value corresponding to a front end distance. If a preset time elapses, a scan starts in operation S1245.

Therefore, the image scanning method according to an exemplary embodiment may start a scan at an accurate time and thus prevent a front end deviation from irregularly changing in a scan image generated by the scanner 170. The image scanning method of FIG. 12 may be performed in the image scanning apparatus 100 having the structure described with reference to FIG. 1 or in image scanning apparatuses having other types of structures.

A method of performing a reservation job to form an image off-line may be realized as a program including a computer-executable algorithm. The program may be stored and provided on a non-transitory computer readable medium.

The non-transitory computer readable medium refers to a medium which does not store data for a short time such as a register, a cache memory, a memory, or the like but semi-permanently stores data and is readable by a device. Applications or programs may be stored and provided on a non-transitory computer readable medium such as a CD, a DVD, a hard disk, a blue-ray disk, a universal serial bus (USB), a memory card, a ROM, or the like. Programs as described above may be stored and provided on the storage unit 150 of the display apparatus 100 as an example of the non-transitory computer readable medium.

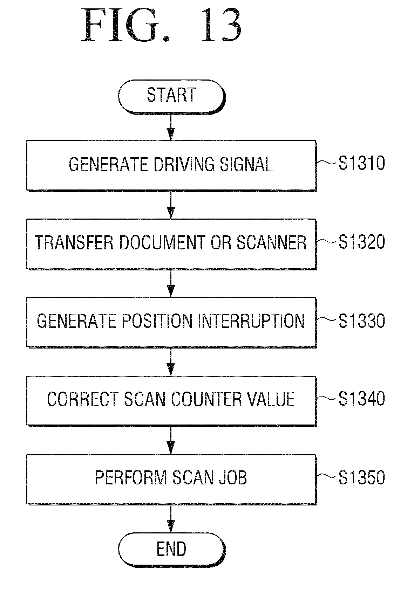

FIG. 13 is a flowchart illustrating an image scanning method according to an exemplary embodiment of the present general inventive concept.

Referring to FIG. 13, in operation S1310, a driving signal for moving a document or a scanner is generated. If a scan command is input, a driving signal for moving the document or the scanner for performing a scan job on the document may be generated.

In operation S1320, the document or the scanner may be moved according to the generated driving signal.

If the document or the scanner passes a preset position, a position interruption is generated in operation S1330. The position interruption may be generated by using a position sensor.

In operation S1340, the position interruption may be recognized, and a difference between a generation time of the position interruption and a recognition time of the position interruption is checked to correct a scan counter value corresponding to a front end distance. If the position interruption is generated, a preset scan counter value may be corrected based on a count value of a counter that performs counting in a preset time unit.

In operation S1350, the document may be scanned to perform a scan job at a time corresponding to the corrected scan counter value. A scan number command may be transmitted to a scanner at a time when the corrected scan counter value is calculated or a scan counter value that is immediately calculated at the time when the corrected scan counter value is calculated may be transmitted to the scanner so as to enable the document to be scanned at a time corresponding to the corrected scan counter value.

Therefore, in the image scanning method according to an exemplary embodiment, a scan counter value may be corrected in consideration of a recognition delay of a position interruption, and a scan job may start by using the corrected scan counter value. Therefore, a scanner may start a scan at an accurate time. The image scanning method according to the an exemplary embodiment may be realized through only a change in a software control code. The image scanning method according to an exemplary embodiment illustrated in FIG. 13 may be performed in an image scanning apparatus having the structure described with reference to FIG. 1 or in image scanning apparatuses having other types of structures.

The image scanning method as described above may be realized as a program including a computer-executable algorithm, and the program may be stored and provided on a non-transitory computer readable medium.

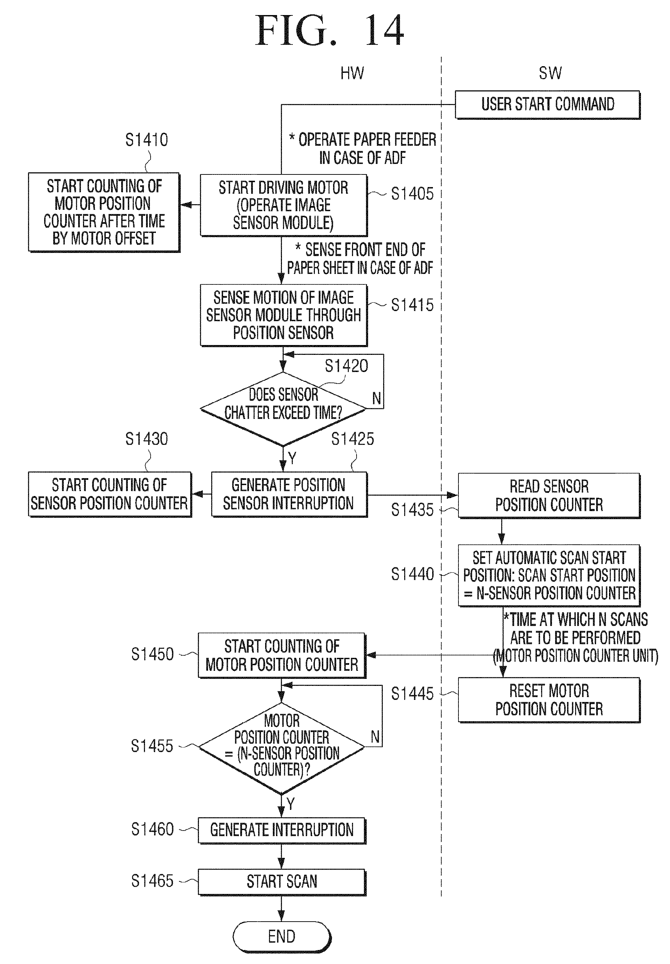

FIG. 14 is a flowchart illustrating an exemplary image scanning method. To facilitate the description of the image scanning method, the scanner 170 may be assumed as a flatbed type.

Referring to FIG. 14, if a user start command is input, the scanner 171 that receives a scan start command controls the driver 150 to move along a scan transfer path in operation S1405. In operation S1410, a motor position counter, which is for checking a motor position as a motor is driven, starts counting.

If the scanner 171 passes a preset position on the scan transfer path according to the movement of the scanner 171, the first position sensor 161 senses a motion of the scanner 171 in operation S1415. In operation S1420, the first position sensor 161 performs sensor chattering on the sensed motion for a preset time. If a preset time elapses according to the sensor chattering, a position sensor generates a position interruption in operation S1425. The generated position interruption is transmitted to the counter 180 and the controller 190.

In operation S1430, the counter 180 that receives the position interruption counts a sensor position.

In operation S1435, the controller 190 that receives the position interruption reads a sensor position counting value of the counter 180. In operation S1440, a preset scan counter value is corrected. In operation S1445, a motor position counter is reset based on the corrected scan counter value.

In operations S1450 and 1455, the scanner 170 counts whether the corrected scan counter value passes the reset motor position counter. If a preset time elapses, a scan interruption is generated to perform a scan job in operations S1460 and 1465.

Although a few embodiments have been shown and described, it would be appreciated by those skilled in the art that changes may be made in these embodiments without departing from the principles of the invention, the scope of which is defined in the claims.

## Claims

1. An image scanning apparatus comprising:
a scanner configured to scan a document to generate a scan image;
a driver configured to move the document or the scanner;
a position sensor configured to, in response to the scanner or the document passing a preset position, generate a position interruption; and
a controller configured to control the driver to move the scanner or the document according to a scan command,
wherein after the position interruption is generated and then a preset time elapses, the scanner scans the document without control of the controller.

2. The image scanning apparatus of claim 1, wherein the scanner directly receives the position interruption from the position sensor and automatically scans the document without a control command of the controller after the position interruption is received and then a preset interruption time elapses.

3. The image scanning apparatus of claim 1 or 2, wherein the preset time is a time value corresponding to a front end distance.

4. The image scanning apparatus of claim 1 or 2, wherein the preset time is determined in a scan counter unit.

5. The image scanning apparatus of claim 4, wherein the scan counter unit is a motor interval of a motor comprised in the driver.

6. The image scanning apparatus of any one of the preceding claims, wherein:
the scanner is a flatbed type;
the driver comprises a scan driver configured to move the scanner on a scan path; and
the position sensor is positioned to keep a distance from a document front end area on the scan path of the scanner and, in response to the scanner passing a preset position on the scan path, generates the position interruption.

7. The image scanning apparatus of any one of claims 1 to 5, wherein:
the scanner is an automatic document feeder (ADF) type;
the driver comprises a document driver configured to move the document on a document transfer path; and
the position sensor is positioned to keep a distance from the scanner on the document transfer path and, in response to the document passing a preset position on the document transfer path, generates the position interruption.

8. An image scanning apparatus comprising:
a scanner configured to scan a document to generate a scan image;
a driver configured to move the document or the scanner;
a position sensor configured to, in response to the scanner or the document passing a preset position, generate a position interruption; and
a controller configured to control the driver to move the document along a scan path according to a scan command,
wherein in response to the position interruption being recognized, the controller checks a difference between a generation time of the position interruption and a recognition time of the position interruption to correct a scan counter value corresponding to a front end distance and controls the scanner to start scanning the document based on the corrected scan counter value.

9. The image scanning apparatus of claim 8, further comprising:
a counter configured to, in response to the position interruption being generated, perform position counting in a preset time unit,
wherein in response to the position interruption being recognized, the controller corrects the scan counter value based on the position counting of the counter.

10. The image scanning apparatus of claim 9, wherein the preset time unit is a motor interval of a motor comprised in the driver.

11. The image scanning apparatus of claim 8, wherein the controller controls the scanner to scan the document after a time corresponding to the corrected scan counter value.

12. The image scanning apparatus of claim 11, wherein the scanner automatically scans the document without receiving a scan start command from the controller.

13. The image scanning apparatus of claim 8, wherein:
the scanner is a flatbed type;
the driver comprises a scan driver configured to move the scanner on a scan path; and
the position sensor is positioned to keep a distance from a document front end area on the scan path of the scanner and, in response to the scanner passing a preset position on the scan path, generates the position interruption.

14. The image scanning apparatus of claim 8, wherein:
the scanner is an ADF type;
the driver comprises a document driver configured to move the document on a document transfer path; and
the position sensor is positioned to keep a distance from the scanner on the document transfer path and, in response to the document passing a preset position on the document transfer path, generates the position interruption.

15. An image scanning method of an image scanning apparatus, comprising:
generating a driving signal for moving a document or a scanner;
moving the document or the scanner according to the generated driving signal;
in response to the document or the scanner passing a preset position, generating a position interruption;
recognizing the position interruption and checking a difference between a generation time of the position interruption and a recognition time of the position interruption to correct a scan counter value corresponding to a front end distance; and
starting scanning the document at a time corresponding to the corrected scan counter value to scan the document.
